# FASCICULE DE BREVET EUROPEEN

(11) **EP 3 083 350 B1**
(45) Date de publication et mention de la délivrance du brevet: **31.01.2018**
(21) Numéro de dépôt: 14803181.8
(22) Date de dépôt: 06.11.2014
(51) Int. Cl.: B60T 8/172

(54) **PROCEDE ET DISPOSITIF DE DETECTION D'UNE SITUATION DE ROULAGE D'UN VEHICULE AUTOMOBILE SUR MAUVAISE ROUTE**
VERFAHREN UND VORRICHTUNG ZUR ERKENNUNG EINER SITUATION, IN DER EIN KRAFTFAHRZEUG ÜBER EINE MANGELHAFTE STRASSENOBERFLÄCHE FÄHRT
METHOD AND DEVICE FOR DETECTING A SITUATION IN WHICH A MOTOR VEHICLE IS DRIVING OVER A POOR ROAD SURFACE

(30) Priorité: 19.12.2013 FR 1363111
(43) Date de publication de la demande: 26.10.2016
(73) Titulaire: Renault s.a.s., 92100 Boulogne-Billancourt (FR)
(72) Inventeur: AMARA, Sofiane, F-75013 Paris (FR); LEROY, Philippe, F-91940 Les Ulis (FR); PLICHET, Roger, F-27340 Pont De L'arche (FR)
(86) Numéro de dépôt international: PCT/FR2014/052835
(87) Numéro de publication internationale: WO 2015/092175

(56) Documents cités:
- EP-A2- 0 795 448
- FR-A1- 2 906 211
- FR-A1- 2 914 993

## Description

La présente invention concerne selon un premier de ses aspects un procédé de détection d'une situation de roulage sur une mauvaise route pour un véhicule automobile pourvu de capteurs de vitesse de rotation des roues pour chaque roue du véhicule. Elle concerne également, selon un autre de ses aspects, un dispositif pour la mise en oeuvre du procédé.

Par mauvaise route, on entend par exemple une route accidentée présentant un profil de route de type tôle ondulée, qui selon la vitesse du véhicule, va entraîner certains comportements au niveau du véhicule, susceptibles de dégrader le confort.

Il est connu de piloter l'amortissement au niveau des roues du véhicule en fonction des caractéristiques de la route afin d'améliorer le confort. Les systèmes d'amortissement pilotés permettent de faire varier le confort principalement en fonction de situations dynamiques (mesures par capteurs), ou de modes sélectionnés par le conducteur (sélecteur).

On connaît du document de brevet FR2914993, une méthode de détection de mauvaise route ne nécessitant pas l'utilisation de capteurs supplémentaires, tels que des capteurs de débattement de suspension, laquelle méthode est essentiellement basée sur une analyse de l'amplitude du bruit haute fréquence présent dans les signaux issus des quatre capteurs de vitesse des roues, qui sont avantageusement installés sur tous les véhicules équipés de systèmes actifs de sécurité, tels que les systèmes dédiés à l'anti-patinage ou à l'antiblocage des roues. Plus précisément, cette méthode agit par filtrage passe haut des signaux de vitesse de rotation des roues et par détection d'une situation de mauvaise route à partir d'un nombre paramétré de dépassements de seuil par la valeur maximale des quatre signaux filtrés de vitesse de roue, représentant la valeur maximale du bruit haute fréquence pour l'ensemble des quatre roues et ce, pendant une durée déterminée et en l'absence de glissements des roues. Cette méthode, par l'application du filtrage passe haut aux signaux de vitesse des roues, permet ainsi de détecter, sans capteur supplémentaire, une situation de roulage du véhicule sur un profil de route haute fréquence, c'est-à-dire sur une route accidentée avec une faible distance entre les obstacles, se caractérisant typiquement par des mouvements brusques de roue par rapport à la caisse du véhicule et/ou à la roue. Cette méthode est toutefois circonscrite à la seule détection et prise en compte de situations de roulage sur mauvaise route haute fréquence et ne couvre pas d'autres situations de mauvaise route, telle que celle présentant un profil de route basse fréquence, se traduisant plutôt au niveau du comportement du véhicule par des mouvements de caisse dégradant le confort.

Le document EP 0 795 448 A2 divulgue un procédé et un dispositif de détection d'une situation de roulage sur une mauvaise route selon les préambules des revendications indépendantes 1 et 9.

Aussi, il existe un besoin pour un système de détection d'une situation de roulage sur mauvaise route, qui soit capable de prendre en compte les situations de mauvaise route basse fréquence afin d'atténuer les sollicitations que la route impose au véhicule dans ces situations, et ce, sans qu'il soit nécessaire de prévoir des capteurs supplémentaires coûteux.

A cet effet, il est proposé un procédé de détection d'une situation de roulage sur une mauvaise route pour un véhicule automobile pourvu de capteurs de vitesse de rotation des roues pour chaque roue dudit véhicule, ledit procédé étant caractérisé en ce qu'il comprend des étapes de :
- réception de signaux de vitesse de rotation des roues issus desdits capteurs ;
- filtrage passe bande des signaux de vitesse de rotation des roues reçus pour isoler les composantes basse fréquence représentant le bruit basse fréquence présent dans les signaux reçus ;
- calcul de la valeur maximale des signaux de vitesse de rotation des roues ainsi filtrés, ladite valeur maximale calculée représentant la valeur maximale du bruit basse fréquence pour l'ensemble des roues ;
- seuillage de ladite valeur maximale calculée par rapport à un seuil paramétré ;
- détection d'un début de situation de roulage sur une mauvaise route comprenant un comptage d'un nombre prédéfini de dépassements de seuil par ladite valeur maximale calculée pendant une distance de roulage prédéterminée et en l'absence d'un glissement de roue.

Avantageusement, le seuil est paramétré en fonction de la vitesse du véhicule.

Le procédé comprend avantageusement une étape de pilotage d'amortisseurs associés aux roues consistant à modifier l'amortissement au niveau des roues suite à la détection du début de situation de roulage sur une mauvaise route, ladite modification de l'amortissement au niveau des roues consistant à augmenter une valeur de tarage des amortisseurs associés aux roues.

De préférence, le filtrage passe bande des signaux de vitesse de rotation des roues peut comprendre une fréquence de coupure basse de l'ordre de 1 Hz et une fréquence de coupure haute de l'ordre de 3 Hz.

Avantageusement, le procédé comprend une étape de détection de fin de situation de roulage sur une mauvaise route lorsque, après que le début d'une situation de roulage sur une mauvaise route ait été détecté, une vitesse minimale prédéterminée du véhicule est atteinte.

Avantageusement, le procédé comprend une étape de détection de fin de situation de roulage sur une mauvaise route lorsque, après que le début d'une situation de roulage sur une mauvaise route ait été détecté, une distance de roulage minimale est parcourue sans détecter à nouveau une situation de roulage sur une mauvaise route.

Le procédé comprend avantageusement une étape de surveillance en parallèle de l'apparition du glissement d'au moins une roue et une étape d'inhibition dudit procédé en cas de détection du glissement d'au moins une roue jusqu'à un retour à une situation sans glissement de roue.

De préférence, la détection du glissement d'une roue consiste à filtrer passe bas les signaux de vitesse de rotation des roues reçus, à calculer les valeurs minimale et maximale de chaque signal de vitesse ainsi filtré, à comparer l'écart entre lesdites valeurs minimale et maximale pour chaque signal filtré à un seuil de glissement prédéfini et, si cet écart est supérieur audit seuil de glissement pendant une durée prédéterminée, à détecter un glissement de roue.

Il est en outre proposé un produit programme d'ordinateur comprenant des instructions pour effectuer les étapes du procédé décrit ci-dessus lorsque ce programme est exécuté par un processeur.

Le procédé de détection décrit ci-dessus peut ainsi être mis en oeuvre par des moyens numériques de traitement, par exemple un microprocesseur, un microcontrôleur ou autre.

Il est en outre proposé un dispositif pour la détection d'une situation de roulage d'un véhicule automobile sur une mauvaise route, ledit dispositif comprenant :
des moyens de réception pour recevoir des signaux de vitesse de rotation des roues issus de capteurs de vitesse de rotation des roues pour chaque roue dudit véhicule, et
des moyens de traitement pour appliquer un filtrage passe bande des signaux reçus destiné à isoler les composantes basse fréquence représentant le bruit basse fréquence présent dans les signaux reçus, pour calculer la valeur maximale des signaux de vitesse de rotation des roues ainsi filtrés, ladite valeur maximale calculée représentant la valeur maximale du bruit basse fréquence pour l'ensemble des roues, pour seuiller ladite valeur maximale calculée par rapport à un seuil paramétré et pour détecter un début de situation de roulage sur une mauvaise route après comptage d'un nombre prédéfini de dépassements de seuil par ladite valeur maximale calculée pendant une distance de roulage prédéterminée et en l'absence d'un glissement de roue.

Ce dispositif peut par exemple comprendre ou être intégré dans un ou plusieurs processeurs.

Il est en outre proposé un véhicule automobile comprenant un dispositif de détection tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

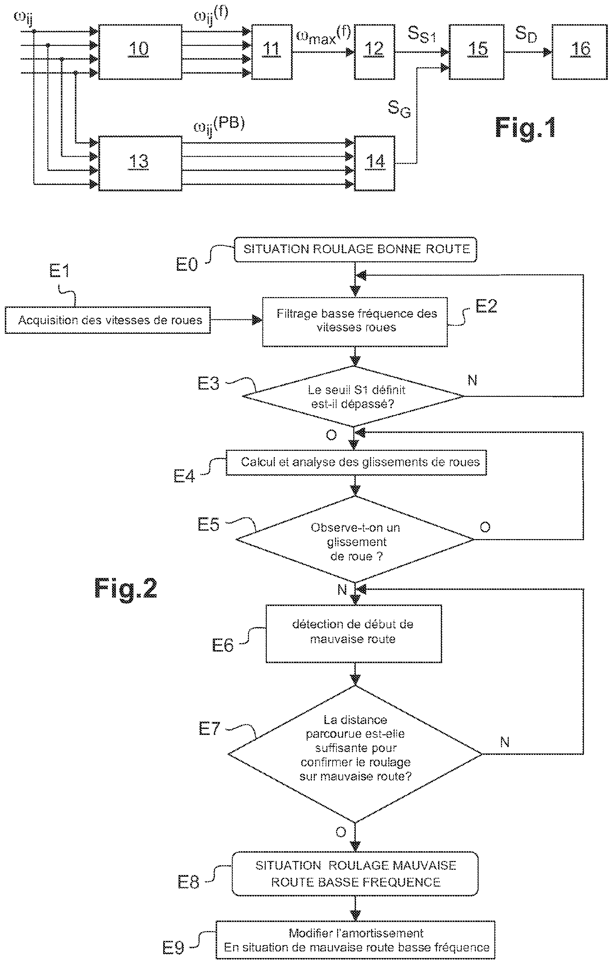

- la Figure 1 est un schéma fonctionnel illustrant le fonctionnement du procédé de l'invention ;
- la Figure 2 est un organigramme illustrant les étapes du procédé selon l'invention.

Le procédé de détection d'une situation de roulage sur mauvaise route selon l'invention s'applique pour un véhicule pourvu de capteurs de vitesse de rotation des roue aptes à fournir quatre signaux de vitesse de rotation ωᵢⱼ pour les quatre roues du véhicules respectivement. Le couple d'indice i,j désignant chacune des roues, i étant égal à 1, respectivement à 2, pour les roues avant respectivement arrière, et j étant égal à 1, respectivement à 2, pour les roues gauches, respectivement droites.

Un avantage d'utiliser les quatre signaux de vitesse de roue est que ces signaux sont disponibles directement sur le réseau CAN du véhicule, dans la mesure où il s'agit de paramètres utilisés par d'autres applications du véhicule relatives à la sécurité et au confort. Le procédé de l'invention consistant à exploiter ces seules informations des quatre vitesses de roue, il n'est pas nécessaire de prévoir de capteurs supplémentaires (capteurs de débattement ou accéléromètres) pour détecter les mauvaises routes de type basse fréquence, comme on le verra plus en détail par la suite.

Dans un premier temps, partant d'une étape E0 de situation de roulage sur une bonne route, une étape E1 de réception de ces quatre signaux de vitesse de rotation de roue est tout d'abord mise en oeuvre. Le procédé est alors conçu pour analyser l'amplitude du bruit basse fréquence présent dans ces signaux reçus. Pour ce faire, un module de filtrage 10 réalise dans une étape E2 un filtrage passe bande des quatre signaux reçus ωᵢⱼ. Ce filtrage passe bande est destiné à isoler les composantes basse fréquence des signaux reçus, tout en éliminant les composantes continues principalement dues aux situations de virage. La bande de fréquence transmise est avantageusement comprise entre au moins 0.5 Hz, préférentiellement environ 1 Hz, pour la fréquence de coupure basse et au moins 2.5 Hz, préférentiellement environ 3 Hz, pour la fréquence de coupure haute, les fréquences de coupure basse et haute constituant des paramètres de réglage du système. Pour cela, selon un mode de réalisation, le filtre passe bande met en oeuvre un filtre passe bas préférentiellement d'ordre 2 ayant une fréquence de coupure correspondant à ladite fréquence de coupure haute, suivi d'un filtre passe haut préférentiellement d'ordre 3 ayant une fréquence de coupure correspondant à ladite fréquence de coupure basse. On obtient ainsi en sortie du module de filtrage 10 quatre signaux filtrés passe bande ωᵢⱼ^{(f)}.

Ce filtrage passe bande est suivie d'une étape E3 de seuillage des signaux de vitesse de rotation des roues ainsi filtrés. Pour ce faire, un module 11 de calcul de la valeur maximale des quatre signaux filtrés passe bande ωᵢⱼ^{(f)} est conçu pour calculer la valeur maximale ωₘₐₓ^{(f)} des quatre signaux filtrés passe bande à chaque instant d'échantillonnage, représentant le bruit basse fréquence maximal existant sur une des quatre roues. Puis, un module de seuillage 12 est conçu pour comparer la valeur maximale ωₘₐₓ^{(f)} des quatre signaux filtrés à un seuil S1 et pour délivrer un signal de seuillage S_{S1} prenant par exemple la valeur 1 si la valeur maximale ωₘₐₓ^{(f)} des signaux filtrés passe bande est supérieure audit seuil S1 et la valeur 0 dans le cas contraire.

Le seuil S1 est avantageusement paramétré en fonction de la vitesse du véhicule et/ou en fonction du mode de pilotage du système d'amortissement piloté choisi par le conducteur. Le paramétrage du seuil S1 pourra par exemple être mise en oeuvre au moyen d'une cartographie appropriée, établie en fonction des paramètres précédemment cités.

On surveille en parallèle dans une étape E4 l'apparition d'un glissement sur une des roues du véhicule, afin d'inhiber le cas échéant, dans une étape E5, le calcul mis en oeuvre par le procédé en cas de détection d'un glissement sur au moins une roue du véhicule jusqu'à un retour à une situation sans glissement de roue. En effet, une situation de patinage risque de fausser le procédé de détection de mauvaise route basse fréquence. Pour ce faire, un module de filtrage 13 réalise, simultanément aux étapes effectuées par les modules 10, 11 et 12, un filtrage passe bas des quatre signaux de vitesse de rotation des roues ωᵢⱼ issus des capteurs, destiné à enlever le bruit qui affecte chacun des ces signaux. Ce module de filtrage 13 met préférentiellement en oeuvre un filtre passe bas du premier ordre dont la fréquence de coupure constitue également un paramètre de réglage du procédé. On obtient ainsi en sortie du module de filtrage 13 quatre signaux filtrés passe bas ωᵢⱼ^{(PB)} où n'apparaît plus que la vitesse pure, sans le bruit, qui sont fournis à un module 14 d'analyse des ces quatre signaux de vitesse filtrés passe bas, conçu pour détecter le glissement d'une des roues. Pour cela, le module d'analyse 14 est conçu pour analyser l'écart entre les valeurs minimale et maximale de chaque signal filtré passe bas ωᵢⱼ^{(PB)}, en le comparant à un seuil de glissement et, si cet écart est supérieur audit seuil de glissement pendant une durée prédéterminée, à détecter un glissement de roue. Un signal S_{G} de détection d'un état de glissement d'une roue est alors délivré par le module d'analyse 14, prévu pour prendre par exemple la valeur 1 lorsqu'un glissement de roue est détecté et maintenu à la valeur 0 dans le cas contraire.

Selon le procédé, lorsqu'aucun glissement de roue n'est détecté, on procède dans une étape E6 à la mise en oeuvre de la détection du début d'une situation de roulage sur une mauvaise route basse fréquence, à partir du signal booléen S_{S1} fourni en sortie du module de seuillage 12 de la valeur maximale ωₘₐₓ^{(f)} des quatre signaux filtrés passe bande ωᵢⱼ^{(f)}. Cette détection est plus précisément établie en fonction d'un nombre prédéfini de dépassements par ladite valeur maximale ωₘₐₓ^{(f)} du seuil S1, pendant une distance de roulage prédéterminée et en l'absence d'un glissement de roue. Pour ce faire, un module de détection 15 est conçu pour incrémenter un compteur sur chaque front montant du signal de seuillage S_{S1}, autrement dit à chaque fois que la valeur maximale ωₘₐₓ^{(f)} des quatre signaux filtrés passe bande de vitesse de rotation des roues dépasse le seuil S1. Ainsi, la détection de début de mauvaise route basse fréquence est réalisée quand le nombre de dépassements décompté atteint le nombre prédéfini, qui est un paramètre de réglage, sur une distance de roulage du véhicule, elle-même paramétrée, pendant laquelle on obtient sans interruption le signal de seuillage à la valeur 1, et en l'absence de glissement des roues. Dit autrement, lorsque l'amplitude des oscillations du bruit basse fréquence est jugée suffisante sur une certaine distance paramétrée de tronçon de route et en l'absence de glissement de roue, la détection de début de situation de roulage sur mauvaise route basse fréquence est validée. La vérification à une étape E7 que la distance parcourue par le véhicule dans ce même état du signal de seuillage est suffisante eu égard à la distance paramétrée, permet de confirmer que ce tronçon de route correspond effectivement à une situation de roulage sur une mauvaise route basse fréquence et ce, afin d'éviter les détections intempestives de situation de roulage sur mauvaise route basse fréquence. Autrement dit, cette étape permet de rendre le procédé plus robuste aux erreurs. Cette étape E7, en cas de confirmation de la situation de roulage sur mauvaise route basse fréquence, délivre un signal de détection S_{D} dont le passage par exemple à la valeur 1 signale dans une étape E8 le début d'une détection de situation de roulage sur mauvaise route.

Lorsqu'une situation de roulage sur mauvaise route basse fréquence est détectée suite à l'étape E7, le compteur des dépassements du seuil S1 par la valeur maximale ωₘₐₓ^{(f)} des quatre signaux filtrés passe bande de vitesse de rotation des roues est remis à zéro. Ce compteur est également remis à zéro lorsque le glissement d'une roue est détecté (signal S_{G} passe à 1).

Lorsqu'une situation de roulage sur mauvaise route basse fréquence est détectée, le signal de détection S_{D} peut par exemple être transmis à une unité de pilotage 16 d'un système d'amortissement piloté permettant de piloter les amortisseurs associés aux roues de façon à modifier, dans une étape E9, l'amortissement au niveau des roues. En particulier, on peut piloter le système d'amortissement de manière à augmenter une valeur de tarage des amortisseurs et ainsi améliorer le confort en situation de roulage sur mauvaise route basse fréquence.

Le procédé est également conçu pour mettre en oeuvre une détection de fin de roulage sur mauvaise route basse fréquence, qui a lieu lorsqu'une situation de roulage sur mauvaise route basse fréquence a été détecté. Le procédé est plus particulièrement conçu pour pouvoir sortir de la situation de roulage sur mauvaise route dans deux cas, soit lorsqu'une vitesse minimale prédéterminée du véhicule est atteinte, soit lorsqu'une distance de roulage minimale est parcourue par le véhicule sans détecter à nouveau une situation de roulage sur une mauvaise route via le traitement appliqué au signal de seuillage S_{S1} comme expliqué précédemment. La détection de fin de mauvaise route peut également avoir lieu, alors qu'une situation de mauvaise route avait été détectée, lorsqu'un glissement de roue est détecté.

## Revendications

1. Procédé de détection d'une situation de roulage sur une mauvaise route pour un véhicule automobile pourvu de capteurs de vitesse de rotation des roues pour chaque roue dudit véhicule, ledit procédé comprenant des étapes de :
- réception (E1) de signaux de vitesse de rotation des roues (ωᵢⱼ) issus desdits capteurs ;
- filtrage passe bande (E2) des signaux de vitesse de rotation des roues reçus pour isoler les composantes basse fréquence représentant le bruit basse fréquence présent dans les signaux reçus ;
- calcul de la valeur maximale (ωₘₐₓ^{(f)}) des signaux de vitesse de rotation des roues ainsi filtrés (ωᵢⱼ^{(f)}), ladite valeur maximale calculée représentant la valeur maximale du bruit basse fréquence pour l'ensemble des roues ;
- seuillage (E3) de ladite valeur maximale calculée par rapport à un seuil (S1) **caractérisé en ce que** ce seuil est paramétré,
ledit procédé étant aussi **caractérisé par** la ;
- détection (E6) d'un début de situation de roulage sur une mauvaise route comprenant un comptage d'un nombre prédéfini de dépassements de seuil (S1) par ladite valeur maximale calculée (ωₘₐₓ^{(f)}) pendant une distance de roulage prédéterminée et en l'absence d'un glissement de roue.

2. Procédé selon la revendication 1, **caractérisé en ce que** le seuil (S1) est paramétré en fonction de la vitesse du véhicule.

3. Procédé selon la revendication 1 ou 2, **caractérisé en ce qu'**il comprend une étape (E9) de pilotage d'amortisseurs associés aux roues consistant à modifier l'amortissement au niveau des roues suite à la détection du début de situation de roulage sur une mauvaise route, ladite modification de l'amortissement au niveau des roues consistant à augmenter une valeur de tarage des amortisseurs associés aux roues.

4. Procédé selon l'une quelconque des revendications précédentes, **caractérisé en ce que** le filtrage passe bande des signaux de vitesse de rotation des roues comprend une fréquence de coupure basse de l'ordre de 1 Hz et une fréquence de coupure haute de l'ordre de 3 Hz.

5. Procédé selon l'une quelconque des revendications précédentes, **caractérisé en ce qu'**il comprend une étape de détection de fin de situation de roulage sur une mauvaise route lorsque, après que le début d'une situation de roulage sur une mauvaise route ait été détecté, une vitesse minimale prédéterminée du véhicule est atteinte.

6. Procédé selon l'une quelconque des revendications précédentes, **caractérisé en ce qu'**il comprend une étape de détection de fin de situation de roulage sur une mauvaise route lorsque, après que le début d'une situation de roulage sur une mauvaise route ait été détecté, une distance de roulage minimale est parcourue sans détecter à nouveau une situation de roulage sur une mauvaise route.

7. Procédé selon l'une quelconque des revendications précédentes, **caractérisé en ce qu'**il comprend une étape (E4) de surveillance en parallèle de l'apparition du glissement d'au moins une roue et une étape (E5) d'inhibition dudit procédé en cas de détection du glissement d'au moins une roue jusqu'à un retour à une situation sans glissement de roue.

8. Procédé selon la revendication 7, **caractérisé en ce que** la détection du glissement d'une roue consiste à filtrer passe bas les signaux de vitesse de rotation des roues (ωᵢⱼ) reçus, à calculer les valeurs minimale et maximale de chaque signal de vitesse ainsi filtré (ωᵢⱼ^{(PB)}), à comparer l'écart entre lesdites valeurs minimale et maximale pour chaque signal filtré (ωᵢⱼ^{(PB)}) à un seuil de glissement prédéfini et, si cet écart est supérieur audit seuil de glissement pendant une durée prédéterminée, à détecter un glissement de roue.

9. Dispositif pour la détection d'une situation de roulage d'un véhicule automobile sur une mauvaise route, ledit dispositif comprenant :
des moyens de réception pour recevoir des signaux de vitesse de rotation des roues (ωᵢⱼ) issus de capteurs de vitesse de rotation des roues pour chaque roue dudit véhicule, et
des moyens de traitement (10, 11, 12, 13, 14, 15) pour appliquer un filtrage passe bande des signaux reçus destiné à isoler les composantes basse fréquence représentant le bruit basse fréquence présent dans les signaux reçus, pour calculer la valeur maximale (ωₘₐₓ^{(f)}) des signaux de vitesse de rotation des roues ainsi filtrés (ωᵢⱼ^{(f)}), ladite valeur maximale calculée (ωₘₐₓ^{(f)}) représentant la valeur maximale du bruit basse fréquence pour l'ensemble des roues, pour seuiller ladite valeur maximale calculée par rapport à un seuil paramétré (S1) et pour détecter un début de situation de roulage sur une mauvaise route après comptage d'un nombre prédéfini de dépassements de seuil (S1) par ladite valeur maximale calculée (ωₘₐₓ^{(f)}) pendant une distance de roulage prédéterminée et en l'absence d'un glissement de roue.

10. Véhicule automobile (1) pourvue de capteurs de vitesse de rotation des roues pour chaque roue du véhicule, **caractérisé en ce qu'**il comprend un dispositif de détection (10) selon la revendication 9.

## Patentansprüche

1. Verfahren zur Erfassung einer Situation des Fahrens auf einer schlechten Wegstrecke für ein mit Drehgeschwindigkeitssensoren der Räder für jedes Rad des Fahrzeugs versehenes Kraftfahrzeug, wobei das Verfahren die folgenden Schritte enthält:
- Empfang (E1) von von den Sensoren stammenden Drehgeschwindigkeitssignalen der Räder (ωᵢⱼ);
- Bandpassfilterung (E2) der empfangenen Drehgeschwindigkeitssignale der Räder, um die Niederfrequenzkomponenten zu isolieren, die das in den empfangenen Signalen vorhandene Niederfrequenzrauschen darstellen;
- Berechnen des maximalen Werts (ωₘₐₓ^{(f)}) der so gefilterten Drehgeschwindigkeitssignale der Räder (ωᵢⱼ^{(f)}), wobei der berechnete maximale Wert den maximalen Wert des Niederfrequenzrauschens für die Gesamtheit der Räder darstellt;
- Schwellwertvergleich (E3) des berechneten maximalen Werts bezüglich einer Schwelle (S1),
**dadurch gekennzeichnet, dass** diese Schwelle parametriert ist,
wobei das Verfahren auch durch die Erfassung (E6) eines Beginns einer Situation des Fahrens auf einer schlechten Wegstrecke gekennzeichnet ist, die ein Zählen einer vordefinierten Anzahl von Schwellenüberschreitungen (S1) durch den berechneten maximalen Wert (ωₘₐₓ^{(f)}) während einer vorbestimmten Fahrstrecke und in in Abwesenheit eines Radschlupfs enthält.

2. Verfahren nach Anspruch 1, **dadurch gekennzeichnet, dass** die Schwelle (S1) abhängig von der Geschwindigkeit des Fahrzeugs parametriert wird.

3. Verfahren nach Anspruch 1 oder 2, **dadurch gekennzeichnet, dass** es einen Schritt (E9) des Steuerns von den Rädern zugeordneten Dämpfern enthält, der darin besteht, die Dämpfung im Bereich der Räder nach der Erfassung des Beginns der Situation des Fahrens auf einer schlechten Wegstrecke zu ändern, wobei die Änderung der Dämpfung im Bereich der Räder darin besteht, einen Abstimmungswert der den Räder zugeordneten Dämpfer zu erhöhen.

4. Verfahren nach einem der vorhergehenden Ansprüche, **dadurch gekennzeichnet, dass** die Bandpassfilterung der Drehgeschwindigkeitssignale der Räder eine niedrige Grenzfrequenz der Größenordnung von 1 Hz und eine hohe Grenzfrequenz der Größenordnung von 3 Hz enthält.

5. Verfahren nach einem der vorhergehenden Ansprüche, **dadurch gekennzeichnet, dass** es einen Schritt der Erfassung des Endes einer Situation des Fahrens auf einer schlechten Wegstrecke enthält, wenn nach der Erfassung des Beginns einer Situation des Fahrens auf einer schlechten Wegstrecke eine vorbestimmte minimale Geschwindigkeit des Fahrzeugs erreicht wird.

6. Verfahren nach einem der vorhergehenden Ansprüche, **dadurch gekennzeichnet, dass** es einen Schritt der Erfassung des Endes einer Situation des Fahrens auf einer schlechten Wegstrecke enthält, wenn nach der Erfassung des Beginns einer Situation des Fahrens auf einer schlechten Wegstrecke eine Mindestfahrstrecke zurückgelegt wird, ohne erneut eine Situation des Fahrens auf einer schlechten Wegstrecke zu erfassen.

7. Verfahren nach einem der vorhergehenden Ansprüche, **dadurch gekennzeichnet, dass** es einen Schritt (E4) der parallelen Überwachung des Auftretens des Schlupfs mindestens eines Rads und einen Schritt (E5) der Sperrung des Verfahrens im Fall der Erfassung des Schlupfs mindestens eines Rads bis zu einer Rückkehr in eine Situation ohne Radschlupf enthält.

8. Verfahren nach Anspruch 7, **dadurch gekennzeichnet, dass** die Erfassung des Schlupfs eines Rads darin besteht, eine Tiefpassfilterung der empfangenen Drehgeschwindigkeitssignale der Räder (ωᵢⱼ) durchzuführen, den minimalen und den maximalen Wert jedes so gefilterten Geschwindigkeitssignals (ωᵢⱼ^{(PB)}) zu berechnen, die Abweichung zwischen dem minimalen und dem maximalen Wert für jedes gefilterte Signal (ωᵢⱼ^{(PB)}) mit einer vordefinierten Schlupfschwelle zu vergleichen, und, wenn diese Abweichung während einer vorbestimmten Dauer größer ist als die Schlupfschwelle, einen Radschlupf zu erfassen.

9. Vorrichtung zur Erfassung einer Situation des Fahrens eines Kraftfahrzeugs auf einer schlechten Wegstrecke, wobei die Vorrichtung enthält:
Empfangseinrichtungen, um Drehgeschwindigkeitssignale der Räder (ωᵢⱼ) zu empfangen, die von Drehgeschwindigkeitssensoren der Räder für jedes Rad des Fahrzeugs stammen, und Verarbeitungseinrichtungen (10, 11, 12, 13, 14, 15), um eine Bandpassfilterung der empfangenen Signale anzuwenden, die dazu bestimmt ist, die Niederfrequenzkomponenten zu isolieren, die das in den empfangenen Signalen vorhandene Niederfrequenzrauschen darstellen, um den maximalen Wert (ωₘₐₓ^{(f)}) der so gefilterten Drehgeschwindigkeitssignale der Räder (ωᵢⱼ^{(f)}) zu berechnen, wobei der berechnete maximale Wert (ωₘₐₓ^{(f)}) den maximalen Wert des Niederfrequenzrauschens für die Gesamtheit der Räder darstellt, um einen Schwellwertvergleich des berechneten maximalen Werts bezüglich einer parametrierten Schwelle (S1) durchzuführen, und um einen Beginn einer Situation des Fahrens auf einer schlechten Wegstrecke nach Zählen einer vordefinierten Anzahl von Schwellenüberschreitungen (S1) durch den berechneten maximalen Wert (ωₘₐₓ^{(f)}) während einer vorbestimmten Fahrstrecke und in Abwesenheit eines Radschlupfs zu erfassen.

10. Kraftfahrzeug (1), das mit Drehgeschwindigkeitssensoren der Räder für jedes Rad des Fahrzeug ausgestattet ist, **dadurch gekennzeichnet, dass** es eine Erfassungsvorrichtung (10) nach Anspruch 9 enthält.

## Claims

1. Method for detecting a situation of driving over a poor road surface for a motor vehicle equipped with wheel rotational speed sensors for each wheel of said vehicle, said process comprising steps of:
- receiving (E1) signals pertaining to the rotational speed of the wheels (ωᵢⱼ) from said sensors;
- band-pass filtering (E2) of signals received pertaining to the rotational speed of the wheels to isolate the low-frequency components representing the low-frequency noise present in the signals received;
- calculating the maximum value (ωₘₐₓ^{(f)}) of the signals pertaining to the rotational speed of the wheels thus filtered (ωᵢⱼ^{(f)}), said maximum value calculated representing the maximum value of the low-frequency noise for all the wheels;
- thresholding (E3) of said maximum value calculated with respect to a threshold (S1) **characterized in that** this threshold is set,
said method being also **characterized by**:
- detecting (E6) a start of a situation of driving over a poor road surface comprising a count of a predetermined number of threshold crossings (S1) by said maximum value calculated (ωₘₐₓ^{(f)}) over a predetermined running distance and in the absence of wheel slippage.

2. Method according to Claim 1, **characterized in that** the threshold (S1) is set according to the speed of the vehicle.

3. Method according to Claim 1 or 2, **characterized in that** it comprises a step (E9) for controlling shock absorbers associated with the wheels consisting in modifying the damping at the wheels following the detection of the start of a situation of driving over a poor road surface, said modification of the damping at the wheels consisting in increasing a calibration value of the shock absorbers associated with the wheels.

4. Method according to any one of the preceding claims, **characterized in that** the band-pass filtering of the signals pertaining to the rotational speed of the wheels comprises a low cut-off frequency in the order of 1 Hz and a high cut-off frequency in the order of 3 Hz.

5. Method according to any one of the preceding claims, **characterized in that** it comprises a step for detecting the end of the situation of driving over a poor road surface when, after the start of a situation of driving over a poor road surface is detected, a predetermined minimum vehicle speed is reached.

6. Method according to any one of the preceding claims, **characterized in that** it comprises a step for detecting the end of the situation of driving over a poor road surface when, after the start of a situation of driving over a poor road surface has been detected, a minimum running distance is traveled without again detecting a situation of driving over a poor road surface.

7. Method according to any one of the preceding claims, **characterized in that** it comprises a simultaneous step (E4) of monitoring the onset of slippage of at least one wheel and a step (E5) of inhibiting said process in the event slippage is detected on at least one wheel until a situation without wheel slippage returns.

8. Method according to Claim 7, **characterized in that** the detection of wheel slippage consists in low-pass filtering of the signals received pertaining to the rotational speed of the wheels (ωᵢⱼ), calculating the minimum and maximum values of each speed signal thus filtered (ωᵢⱼ^{(PB)}), comparing the difference between said minimum and maximum values for each filtered signal (ωᵢⱼ^{(PB)}) to a predefined slippage threshold and, if this difference is greater than said slippage threshold for a predetermined duration, detecting wheel slippage.

9. Device for detecting a situation in which a motor vehicle is driving over a poor road surface, said device comprising:
receiving means for receiving signals pertaining to the rotational speed of the wheels (ωᵢⱼ) from wheel rotational speed sensors for each wheel of said vehicle, and
processing means (10, 11, 12, 13, 14, 15) for applying band-pass filtering of the signals received intended to isolate the low-frequency components representing the low-frequency noise present in the signals received, to calculate the maximum value (ωₘₐₓ^{(f)}) of the signals thus filtered pertaining to the rotational speed of the wheels (ωᵢⱼ^{(f)}), said maximum value calculated (ωₘₐₓ^{(f)}) representing the maximum value of the low-frequency noise for all the wheels, to threshold said maximum value calculated with respect to a set threshold (S1) and to detect a start of a situation of driving over a poor road surface after counting a predetermined number of threshold crossings (S1) by said maximum value calculated (ωₘₐₓ^{(f)}) over a predetermined running distance and in the absence of wheel slippage.

10. Motor vehicle (1) equipped with wheel rotational speed sensors for each wheel of the vehicle, **characterized in that** it comprises a detection device (10) according to Claim 9.
